# EUROPEAN PATENT SPECIFICATION

(11) **EP 3 907 855 B1**
(45) Date of publication and mention of the grant of the patent: **27.08.2025**
(21) Application number: 21168418.8
(22) Date of filing: 14.04.2021
(51) Int. Cl.: H02J 50/10, B64G 6/00

(54) **INDUCTIVE POWER TRANSFER IN DEEP SPACE AND REMOTE APPLICATIONS**
INDUKTIVE ENERGIEÜBERTRAGUNG IM WELTAUM- UND IN FERNANWENDUNGEN
TRANSFERT INDUCTIF D'ÉNERGIE DANS L'ESPACE ET LES APPLICATIONS À DISTANCE

(30) Priority: 06.05.2020 IN 202011019302
(43) Date of publication of application: 10.11.2021
(73) Proprietor: Hamilton Sundstrand Corporation, Charlotte, NC 28217-4578 (US)
(72) Inventor: NAIR, Rashmitha Ramesh, 560102 Bengaluru (IN)
(74) Representative: Dehns

(56) References cited:
- US-A1- 2015 222 141
- US-B1- 10 575 198

## Description

### CROSS-REFERENCE TO RELATED APPLICATIONS

This application claims the benefit of IN Provisional Application No. 202011019302 filed May 6, 2020.

### BACKGROUND

Exemplary embodiments pertain to the art of battery charging and, in particular, to inductive power transfer in deep space and remote applications.

Rechargeable batteries are used in a wide variety of devices and applications. Common exemplary devices include cellular telephones and laptops. In deep space applications, an extravehicular mobility unit (EMU) is worn during extravehicular activities. The primary life support subsystem that is part of the EMU is powered by a battery. Wireless power transmission eliminates the need for interconnecting wires. Document US2015/222141A1 discloses an inductive power transfer system comprising: a receiver configured to supply the inductive power to a battery, a mobile charge platform configured to transport a transmitter configured to generate the inductive power to the receiver, and an atmospheric suit that includes the receiver.

### BRIEF DESCRIPTION

According to the present invention, an inductive power transfer system according to claim 1, an atmospheric suit according to claim 5, and a mobile charge platform according to claim 9 are provided. According to the present invention, an inductive power transfer system includes a receiver to supply the inductive power to a battery, and a mobile charge platform to transport a transmitter to generate the inductive power.

According to the present invention, the inductive power transfer system also includes an atmospheric suit that includes the receiver.

Additionally or alternatively, in this or other embodiments, the atmospheric suit includes at least one subsystem powered by the battery.

According to the present invention, the atmospheric suit is an extravehicular mobility unit for a deep space application.

According to the present invention, the mobile charge platform is a rover for the deep space application.

Additionally or alternatively, in this or other embodiments, the mobile charge platform includes a power supply for the transmitter.

Additionally or alternatively, in this or other embodiments, the receiver includes a receiver coil and the transmitter includes a transmitter coil.

Additionally or alternatively, in this or other embodiments, the receiver includes a rectifier to provide direct current to the battery.

According to the present invention, an atmospheric suit used in a system of claim 1 includes a battery configured to power at least one subsystem of the atmospheric suit, and a receiver configured to receive inductive power from a transmitter to recharge the battery.

The atmospheric suit is an extravehicular mobility unit (EMU) for a deep space application.

Additionally or alternatively, in this or other embodiments, the at least one subsystem is a primary life support subsystem of the EMU.

According to the present invention, the receiver receives the inductive power from a rover in the deep space application.

Additionally or alternatively, in this or other embodiments, the receiver includes a receiver coil that couples with a transmitter coil of the transmitter.

Additionally or alternatively, in this or other embodiments, the receiver includes a rectifier to generate direct current from the inductive power to recharge the battery.

According to the present invention, a mobile charge platform for inductive power transfer used in a system of claim 1 includes a power supply, and a transmitter to transmit the inductive power to a receiver to which the mobile charge platform transports the transmitter.

Additionally or alternatively, in this or other embodiments, the transmitter includes a transmit coil that couples with a receiver coil of the receiver.

Additionally or alternatively, in this or other embodiments, the transmitter includes an oscillator.

### BRIEF DESCRIPTION OF THE DRAWINGS

The following descriptions should not be considered limiting in any way. With reference to the accompanying drawings, like elements are numbered alike:
FIG. 1 shows an exemplary inductive power transfer system in a deep space application according to one or more embodiments;
FIG. 2 is a block diagram of aspects of the inductive power transfer system according to one or more embodiments; and
FIG. 3 shows an exemplary inductive power transfer system in a remote application according to one or more embodiments not forming part of the present invention.

### DETAILED DESCRIPTION

A detailed description of one or more embodiments of the disclosed apparatus and method are presented herein by way of exemplification and not limitation with reference to the Figures.

Embodiments of the systems and methods detailed herein pertain to inductive power transfer in deep space and remote applications. As previously noted, an EMU is worn for extravehicular activity in the deep space environment. A rover may accompany the wearer of the EMU during the extravehicular activity. The rover can carry equipment and collected samples for the wearer, for example. The EMU is an atmospheric suit that maintains gases within the suit to sustain the wearer outside the space vehicle (e.g., space station, shuttle). A battery is used to power the primary life support subsystem of the EMU. Because the life support function of the EMU, which is powered by the battery, is critical, the duration of a mission outside the space vehicle can be limited based on the life of the battery.

Prior EMUs include a connector to recharge the battery. This connector is located on the inside of the EMU to protect it from the deep space environment, dust, and other particles floating within the space vehicle. This location of the connector makes recharging the battery outside the space vehicle (e.g., by the rover) infeasible since exposing the connector requires breaching the integrity of the environment within the EMU. Even inside the space vehicle, floating particles can settle on the connector, creating a potential for a short circuit. Inductive power transfer, according to one or more embodiments, addresses many issues caused by the connector. There is no connector to be protected to facilitate wireless charging.

As a result, recharging of the EMU battery may be performed even outside the space vehicle. This, in turn, facilitates longer durations for extravehicular activity. The wireless charging is enabled by the rover outside the space vehicle. The rover may carry additional batteries to power itself and to act as a power source for the transmitter in the inductive power transfer. The rover may support recharging of more than one EMU and may travel between EMUs that require recharge. Further, an unmanned aerial or other vehicle may carry a transmitter for inductive power transfer in remote applications where the receiver (e.g., battery for an atmospheric suit or other rechargeable device) cannot reach a stationary wired or wireless recharging station. Further, while a mobile charge platform is discussed herein, an atmospheric suit may be wirelessly charged by a stationary recharging station, as well. For example, the battery of the EMU may be wirelessly charged in the space vehicle prior to an extravehicular mission.

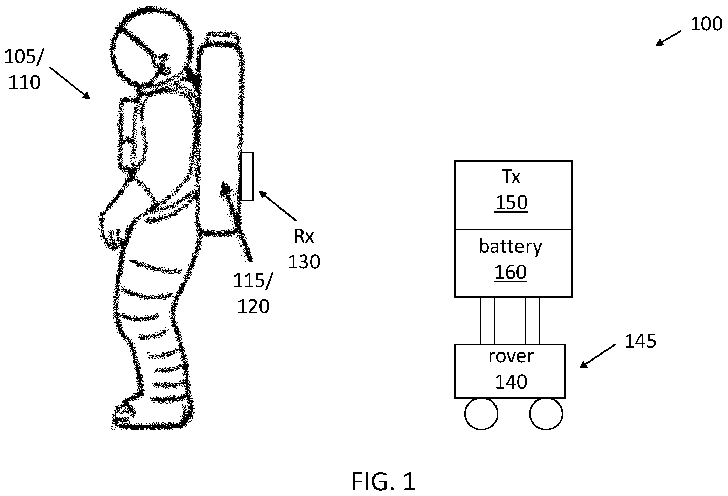

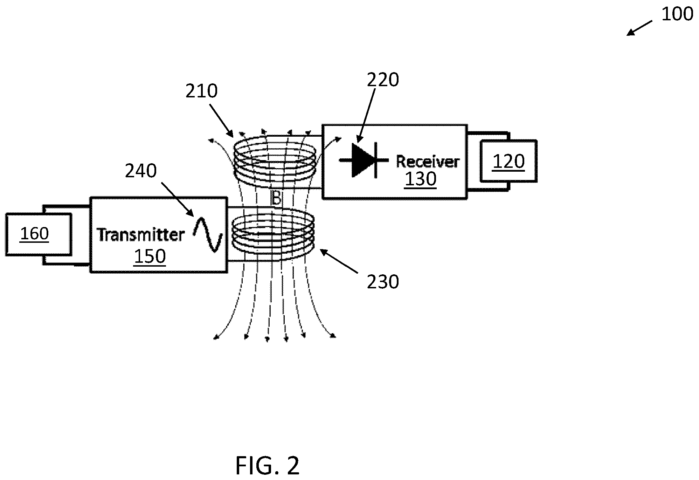

FIG. 1 shows an exemplary inductive power transfer system 100 in a deep space application according to one or more embodiments. An EMU 110 is shown as an exemplary atmospheric suit 105 and includes a backpack 115. The backpack 115 may include the primary life support subsystem, which supplies oxygen to the wearer, for example. The backpack 115 may also include the battery 120 that powers the primary life support subsystem. According to the exemplary embodiment shown in FIG. 1, the EMU 110 includes the battery 120 and a receiver (Rx) 130 for wireless charging of the battery 120. While one battery 120 is discussed for explanatory purposes, any number of batteries 120 may be recharged according to alternate embodiments. The receiver 130 is further discussed with reference to FIG. 2. A rover 140 serves as a mobile charge platform 145. The mobile charge platform 145 is mobile, as the name implies, such that it can transport a transmitter 150 to the battery 120 that requires recharge. As shown, the rover 140 includes the transmitter (Tx) 150 for wireless charging of the battery 120 of the EMU 110. The transmitter 150 is further discussed with reference to FIG. 2. The rover 140 may also carry one or more batteries 160 that act as a power source for the wireless charging.

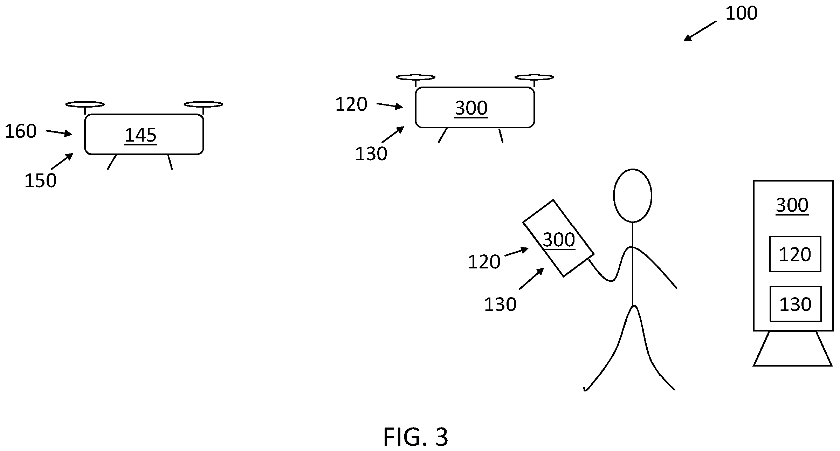

The deep space environment is shown for explanatory purposes. As previously noted, other remote applications may require other atmospheric suits 105 (e.g., containment suit, hazmat suit) or devices 300 as discussed with reference to FIG. 3. Other remote applications may also include other mobile charge platform 145 (e.g., drone or other unmanned aerial vehicle (UAV), remote land-based vehicle) as discussed with reference to FIG. 3. An atmospheric suit 105 facilitates untethered movement of the wearer in inhospitable environments. For example, the EMU 110 facilitates deep space extravehicular activity by the wearer. According to one or more embodiments, the atmospheric suit 105 includes a receiver 130 to facilitate wireless charging of its battery 120 which, in turn, facilitates extending the duration of the remote activity. The mobile charge platform 145 allows wireless recharging of the battery 120 of the atmospheric suit 105 anywhere, without the wearer having to reach a designated recharging station. For example, the rover 140 may wirelessly charge the battery 120 of the EMU 110 anywhere in the extravehicular environment. According to one or more embodiments, the rover 140 includes a transmitter 150 to facilitate the wireless charging.

FIG. 2 is a block diagram of aspects of the inductive power transfer system 100 according to one or more embodiments. Inductive power transfer is known and is only generally described here. One or more batteries 160 carried by the mobile charge platform 145, such as the rover 140 in the deep space application, act as the supply to the transmitter 150. The transmitter 150 may include an oscillator 240 and a coil 230, for example. The receiver 130 may include another coil 210 and a rectifier 220, for example, to supply the load, which is the battery 120 of the atmospheric suit 105, such as the EMU 110.

Power is transferred between the coils 210, 230 by a magnetic field B. Specifically, an alternating current (AC) through the coil 230 of the transmitter 150, which is generated by the source (i.e., battery 160) and oscillator 240, generates an oscillating magnetic field that passes through the coil 210 of the receiver 130. The magnetic field generates an alternating electromotive force, a voltage, which creates an alternating current in the receiver 130. This induced AC in the receiver 130 is rectified, by the rectifier 220, to direct current (DC) that can supply the load (i.e., recharge the battery 120). Efficiency of the inductive power transfer is affected by the coupling between the coils 210, 230 which is affected by the distance between the coils 210, 230 and the ratio of the diameters of the coils 210, 230.

FIG. 3 shows an exemplary inductive power transfer system 100 in a remote application according to one or more embodiments not forming part of the present invention. The remote application may involve an outdoor environment without a charging station, for example. The scenario shown in FIG. 3 illustrates that a mobile charge platform 145 can facilitate recharge of a battery 120 in any environment, whether the battery 120 supports an atmospheric suit 105 as in the case shown in FIG. 1 or not. The exemplary mobile charge platform 145 in FIG. 3 is a drone that includes a supply (i.e., battery 160) and a transmitter 150. The receiver 130 and the load (i.e., battery 120) may be in a device 300 such as a handheld device (e.g., smart phone, tablet), for example. The device 300 may be another drone or a remote charging station as another example. The recharging may not require the other drone to land. That is mid-air recharging may be performed by the mobile charge platform 145. In addition, recharging of a remote charging station may facilitate charging stations at locations without wired or regular power supply. The mobile charge platform 145 is not limited in the load that it may supply. The mobile charge platform 145 facilitates recharging of the device anywhere. The mobile charge platform 145 may be deployed as a service to a number of devices 300 in a remote location, for example.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An inductive power transfer system comprising:
a receiver (130) configured to supply the inductive power to a battery (120);
a mobile charge platform (145) configured to transport a transmitter configured to generate the inductive power to the receiver (130);
an atmospheric suit (105) that includes the receiver; and **characterized in that**
the atmospheric suit (105) is an extravehicular mobility unit for a deep space application, and wherein the mobile charge platform (145) is a rover configured for the deep space application.

2. The inductive power transfer system according to claim 1, wherein the atmospheric suit (105) includes at least one subsystem powered by the battery.

3. The inductive power transfer system according to any preceding claim, wherein the mobile charge platform (145) includes a power supply for the transmitter.

4. The inductive power transfer system according to any preceding claim, wherein the receiver (130) includes a receiver coil and the transmitter includes a transmitter coil, and preferably wherein the receiver includes a rectifier configured to provide direct current to the battery.

5. An atmospheric suit (105) for use in the system of claim 1, the atmospheric suit comprising:
the battery (120) configured to power at least one subsystem of the atmospheric suit; and
the receiver (130) configured to receive inductive power from the transmitter to recharge the battery, wherein the atmospheric suit (105) is an extravehicular mobility unit, EMU, for a deep space application.

6. The atmospheric suit according to claim 5, wherein the at least one subsystem is a primary life support subsystem of the EMU; wherein the receiver is configured to receive the inductive power from the rover in the deep space application.

7. The atmospheric suit according to any of claims 5-6, wherein the receiver (130) includes a receiver coil that couples with a transmitter coil of the transmitter.

8. The atmospheric suit according to any of claims 5-7, wherein the receiver (130) includes a rectifier configured to generate direct current from the inductive power to recharge the battery.

9. A mobile charge platform (145) for inductive power transfer, for use in the system as claimed in claim 1, the mobile charge platform comprising:
the power supply; and
the transmitter (150) configured to transmit the inductive power to the receiver to which the mobile charge platform transports the transmitter, wherein the mobile charge platform is the rover for a deep space application.

10. The mobile charge platform according to claim 9, wherein the transmitter (150) includes a transmit coil that couples with a receiver coil of the receiver; or wherein the transmitter includes an oscillator.

## Patentansprüche

1. System zur induktiven Energieübertragung, das Folgendes umfasst:
einen Empfänger (130), der dazu konfiguriert ist, die induktive Energie an eine Batterie (120) zu liefern;
eine mobile Ladeplattform (145), die dazu konfiguriert ist, einen Sender zu transportieren, der dazu konfiguriert ist, die induktive Energie zu erzeugen, die an den Empfänger (130) geliefert wird;
einen Druckanzug (105), der den Empfänger enthält; und **dadurch gekennzeichnet ist, dass**
der Druckanzug (105) eine Außenbord-Mobilitätseinheit für den Einsatz im Weltraum ist, wobei die mobile Ladeplattform (145) ein für die Anwendung im Weltraum konfigurierter Rover ist.

2. Das induktive Energieübertragungssystem nach Anspruch 1, wobei der Druckanzug (105) mindestens ein von der Batterie mit Energie versorgtes Subsystem umfasst.

3. Das induktive Energieübertragungssystem nach einem der vorhergehenden Ansprüche, wobei die mobile Ladeplattform (145) eine Stromversorgung für den Sender umfasst.

4. Das induktive Energieübertragungssystem nach einem der vorhergehenden Ansprüche, wobei der Empfänger (130) eine Empfängerspule und der Sender eine Senderspule umfasst, und wobei der Empfänger vorzugsweise einen Gleichrichter umfasst, der dazu konfiguriert ist, Gleichstrom an die Batterie zu liefern.

5. Ein Druckanzug (105) zur Verwendung im System nach Anspruch 1, wobei der Druckanzug umfasst:
die Batterie (120), die so konfiguriert ist, dass sie mindestens ein Subsystem des Druckanzugs mit Strom versorgt; und
wobei der Empfänger (130) dazu konfiguriert ist, induktive Energie vom Sender zu empfangen, um die Batterie wieder aufzuladen, wobei der Druckanzug (105) eine Außenbord-Mobilitätseinheit (EMU) für den Einsatz im Weltraum ist.

6. Der Druckanzug nach Anspruch 5, wobei das mindestens eine Subsystem ein primäres Lebenserhaltungssubsystem der EMU ist; wobei der Empfänger so konfiguriert ist, dass er die induktive Leistung vom Rover in der Anwendung im Weltraum empfängt.

7. Der Druckanzug nach einem der Ansprüche 5-6, wobei der Empfänger (130) eine Empfängerspule umfasst, die mit einer Senderspule des Senders gekoppelt ist.

8. Der Druckanzug nach einem der Ansprüche 5 bis 7, wobei der Empfänger (130) einen Gleichrichter umfasst, der so konfiguriert ist, dass er aus der induktiven Leistung Gleichstrom erzeugt, um die Batterie wieder aufzuladen.

9. Eine mobile Ladeplattform (145) für induktive Energieübertragung zur Verwendung im System nach Anspruch 1, wobei die mobile Ladeplattform Folgendes umfasst:
die Stromversorgung; und
der Sender (150), der dazu konfiguriert ist, die induktive Leistung an den Empfänger zu übertragen, zu dem die mobile Ladeplattform den Sender transportiert, wobei die mobile Ladeplattform der Rover für eine Anwendung im Weltraum ist.

10. Die mobile Ladeplattform nach Anspruch 9, wobei der Sender (150) eine Sendespule umfasst, die mit einer Empfangsspule des Empfängers gekoppelt ist; oder wobei der Sender einen Oszillator umfasst.

## Revendications

1. Système de transfert d'énergie inductive comprenant :
un récepteur (130) configuré pour fournir l'énergie inductive à une batterie (120) ;
une plate-forme de charge mobile (145) configurée pour transporter un émetteur configuré pour générer l'énergie inductive vers le récepteur (130) ;
une combinaison atmosphérique (105) qui comporte le récepteur ;
et **caractérisée en ce que**
la combinaison atmosphérique (105) est une unité de mobilité extravéhiculaire pour une application dans l'espace lointain, et dans lequel la plate-forme de charge mobile (145) est un rover configuré pour l'application dans l'espace lointain.

2. Système de transfert d'énergie inductive selon la revendication 1, dans lequel la combinaison atmosphérique (105) comporte au moins un sous-système alimenté par la batterie.

3. Système de transfert d'énergie inductive selon une quelconque revendication précédente, dans lequel la plate-forme de charge mobile (145) comporte une alimentation électrique pour l'émetteur.

4. Système de transfert d'énergie inductive selon une quelconque revendication précédente, dans lequel le récepteur (130) comporte une bobine réceptrice et l'émetteur comporte une bobine émettrice, et de préférence dans lequel le récepteur comporte un redresseur configuré pour fournir un courant continu à la batterie.

5. Combinaison atmosphérique (105) pour une utilisation dans le système selon la revendication 1, la combinaison atmosphérique comprenant :
la batterie (120) configurée pour alimenter au moins un sous-système de la combinaison atmosphérique ; et
le récepteur (130) configuré pour recevoir une énergie inductive de l'émetteur pour recharger la batterie, dans laquelle la combinaison atmosphérique (105) est une unité de mobilité extravéhiculaire, EMU, pour une application dans l'espace lointain.

6. Combinaison atmosphérique selon la revendication 5, dans laquelle l'au moins un sous-système est un sous-système de survie principal de l'EMU ; dans laquelle le récepteur est configuré pour recevoir l'énergie inductive du rover dans l'application dans l'espace lointain.

7. Combinaison atmosphérique selon l'une quelconque des revendications 5 et 6, dans laquelle le récepteur (130) comporte une bobine réceptrice qui se couple à une bobine émettrice de l'émetteur.

8. Combinaison atmosphérique selon l'une quelconque des revendications 5 à 7, dans laquelle le récepteur (130) comporte un redresseur configuré pour générer un courant continu à partir de l'énergie inductive pour recharger la batterie.

9. Plate-forme de charge mobile (145) pour transfert d'énergie inductive, pour une utilisation dans le système selon la revendication 1, la plateforme de charge mobile comprenant :
l'alimentation électrique ; et
l'émetteur (150) configuré pour transmettre l'énergie inductive au récepteur vers lequel la plate-forme de charge mobile transporte l'émetteur, dans laquelle la plate-forme de charge mobile est le rover pour une application dans l'espace lointain.

10. Plate-forme de charge mobile selon la revendication 9, dans laquelle l'émetteur (150) comporte une bobine émettrice qui se couple à une bobine réceptrice du récepteur ; ou dans laquelle l'émetteur comporte un oscillateur.
